# EUROPÄISCHE PATENTSCHRIFT

(11) **EP 3 097 830 B1**
(45) Veröffentlichungstag und Bekanntmachung des Hinweises auf die Patenterteilung: **25.03.2020**
(21) Anmeldenummer: 16171210.4
(22) Anmeldetag: 25.05.2016
(51) Int. Cl.: A47J 37/04, B30B 11/20, B30B 11/00

(54) **GRILLAUFSATZ**
GRILLING ATTACHMENT
SUPPORT DE GRILL

(30) Priorität: 27.05.2015 AT 5009915 U
(43) Veröffentlichungstag der Anmeldung: 30.11.2016
(73) Patentinhaber: Thumfart, Michael, 4072 Alkoven (AT)
(72) Erfinder: Thumfart, Michael, 4072 Alkoven (AT)
(74) Vertreter: Burger, Hannes

(56) Entgegenhaltungen:
- US-A- 2 654 307
- US-A1- 2004 025 709
- US-A1- 2014 299 002
- US-A1- 2014 305 318

## Beschreibung

Die Erfindung betrifft einen Grillaufsatz zur Aufnahme von auf einem Spieß angeordnetem Grillgut.

Aus dem Stand der Technik sind verschiedene Grillaufsätze zum Halten von Spießen bekannt, welche einen komplexen Aufbau aufweisen. Derartige Grillaufsätze weisen den Nachteil auf, dass sie teuer in der Herstellung sind und auch schwierig zu handhaben sind.

Aus der US 2 654 307 A und der US 2004/025709 A1 sind beispielsweise verschiedene Grillaufsätze zum Halten von Spießen bekannt.

Der vorliegenden Erfindung liegt die Aufgabe zugrunde, einen Grillaufsatz zu schaffen, welcher möglichst einfach am Grill anzubringen ist.

Diese Aufgabe der Erfindung wird durch die Merkmale gemäß Anspruch 1 gelöst.

Erfindungsgemäß ist ein Grillaufsatz zur Aufnahme von auf einem Spieß angeordnetem Grillgut ausgebildet. Der Grillaufsatz ist zum Befestigen am Gitterrost eines Grill ausgebildet, wobei der Grillaufsatz einen Grillaufsatzkörper mit einer Ausnehmung zur Aufnahme des Spießes umfasst. Der Grillaufsatzkörper ist als einteiliges Blechbiegeteil mit einem ersten Blechschenkel und einem zweiten Blechschenkel ausgebildet, wobei die beiden Blechschenkel als Abstützelemente zur Befestigung des Grillaufsatzkörpers am Gitterrost ausgebildet sind.

Von Vorteil an der erfindungsgemäßen Ausbildung des Grillaufsatzes ist, dass dieser einfach herzustellen ist und durch dessen geringer Komplexität eine geringe Masse aufweist und somit im Gebrauch einfach handzuhaben ist. Durch die Herstellung des Grillaufsatzes aus einem Blechbiegeteil kann darüber hinaus erreicht werden, dass dieser formstabil und robust ist und in einem Produktionsverfahren zur Massenfertigung einfach hergestellt werden kann.

Weiters ist vorgesehen, dass der erste Blechschenkel eine Befestigungsaussparung zum formschlüssigen Hintergreifen des Gitterrostes aufweist und dass der zweite Blechschenkel einen Abstützbereich zum Abstützen des Grillaufsatzkörpers am Gitterrost aufweist. Von Vorteil ist hierbei, dass der Grillaufsatz mittels der beiden Blechschenkel formschlüssig mit dem Gitterrost verbunden werden kann und somit eine ausreichende Stabilität zum Halten des an den Spießen angeordneten Grillgutes aufweist.

Ferner ist vorgesehen, dass die Befestigungsaussparung des ersten Blechschenkels durch zwei im Blechschenkel angeordnete Ausnehmungen ausgebildet ist, wobei durch die Ausnehmungen ein T-förmiger Kopf gebildet ist. Von Vorteil ist hierbei, dass durch eine derart ausgebildete Befestigungsaussparung der Grillaufsatz einfach am Gitterrost montiert werden kann bzw. einfach wieder vom Gitterrost abgenommen werden kann. Insbesondere kann durch den T-förmigen Kopf eine einfache Anbindung zum Gitterrost geschaffen werden.

Darüber hinaus kann vorgesehen sein, dass im Abstützbereich des zweiten Blechschenkels eine Lasche angeordnet ist durch welche die Aufstandsfläche vergrößert wird. Von Vorteil ist hierbei, dass die einzelnen Gitterstäbe des Gitterrostes dadurch nicht übermäßig belastet werden und somit die Gefahr der Beschädigung des Gitterrostes durch den Grillaufsatz hintangehalten wird.

Vorteilhaft ist auch eine Ausprägung, gemäß welcher vorgesehen sein kann, dass der erste Blechschenkel gegenüber dem zweiten Blechschenkel in einem Winkel zwischen 70° und 175°, insbesondere zwischen 120° und 170°, bevorzugt zwischen 160° und 170° umgeschlagen ist. Insbesondere kann dadurch erreicht werden, dass der Platzbedarf des Grillaufsatzes möglichst gering gehalten wird.

Gemäß einer Weiterbildung ist es möglich, dass zwischen erstem und zweitem Blechschenkel ein zwischenliegender Verbindungsschenkel angeordnet ist. Von Vorteil ist hierbei, dass durch den Verbindungsschenkel der Abstand der beiden Blechschenkel zueinander erhöht werden kann und somit die Stabilität des Grillaufsatzes erhöht werden kann. Insbesondere kann dadurch der Auflageabstand der Spieße erhöht werden, sodass die Belastung der Spieße verringert werden kann, bzw. damit die Spieße stabiler gehalten werden können.

Ferner kann es zweckmäßig sein, dass der erste Blechschenkel sich in Richtung zur Befestigungsaussparung hin verjüngend ausgebildet ist. Vorteilhaft ist hierbei, dass der Grillaufsatz beim Verbau an einem runden Gitterrost, wie bei einem Kugelgrill, möglichst nahe bis an den Außenrand des Grillrostes geschoben werden kann, sodass das zu erwärmende Grillgut mittig am Grill platziert werden kann. Darüber hinaus kann dadurch der Montagevorgang des Grillaufsatzes erleichtert werden, da der Außenrand des Grills nicht gestreift wird.

Darüber hinaus kann vorgesehen sein, dass der zweite Blechschenkel im Wesentlichen durch zwei voneinander beabstandete Blechschenkelstreifen gebildet ist. Von Vorteil ist hierbei, dass der Grillaufsatz durch die Materialersparnis eine möglichst geringe Masse aufweist. Darüber hinaus kann durch diese Ausprägung die aufsteigende heiße Luft ungehindert entlang des ersten Blechschenkels durch die beiden Blechschenkelstreifen des zweiten Blechschenkel hindurch in Richtung Grillgut strömen.

Weiters kann vorgesehen sein, dass die Ausnehmung zur Aufnahme des Spießes eine Positioniervertiefung zur exakten Positionierung des Spießes aufweist. Von Vorteil ist hierbei, dass durch die Positioniervertiefung erreicht werden kann, dass die einzelnen im Grillaufsatz aufgenommenen Spieße möglichst stabil im Grillaufsatz aufgenommen werden und dass am Grillaufsatz verschiedene Spieße mit verschiedenen Durchmessern eingesetzt werden. Schließlich kann vorgesehen sein, dass eine Wandstärke des Grillaufsatzkörpers zwischen 1mm und 3mm, insbesondere zwischen 1,4mm und 2,6mm, bevorzugt 2mm beträgt. Von Vorteil ist hierbei, dass ein Grillaufsatzkörper aus einem Blechteil mit einer derartigen Wandstärke zum einen fertigungstechnisch herzustellen ist und darüber hinaus eine möglichst geringe Masse und eine möglichst hohe Formstabilität aufweist.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung eines Grills mit einem Grillaufsatz und Grillgut;
- Fig. 2: eine Ansicht von hinten auf den Grillaufsatz;
- Fig. 3: eine Schnittdarstellung des Grillaufsatzes während des Einsetzens in den Grill;
- Fig. 4: eine Ansicht von hinten auf den Grillaufsatz während des Einsetzens in den Grill;
- Fig. 5: eine perspektivische Darstellung eines ersten Schrittes zum Einsetzen des Grillaufsatzes in den Grill;
- Fig. 6: eine perspektivische Darstellung eines zweiten Schrittes zum Einsetzen des Grillaufsatzes in den Grill;
- Fig. 7: eine perspektivische Ansicht des in den Grill eingesetzten Grillaufsatzes;
- Fig. 8: eine Schnittdarstellung des Grills mit einem weiteren Ausführungsbeispiel des Grillaufsatzes und Grillgut;
- Fig. 9: eine Seitenansicht eines Ausführungsbeispiels des Grillaufsatzes mit Variierungsmöglichkeit des Aufnahmewinkels des Spießes;
- Fig. 10: eine Draufsicht eines Ausführungsbeispiels des Grillaufsatzes mit Variierungsmöglichkeit des Aufnahmewinkels des Spießes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

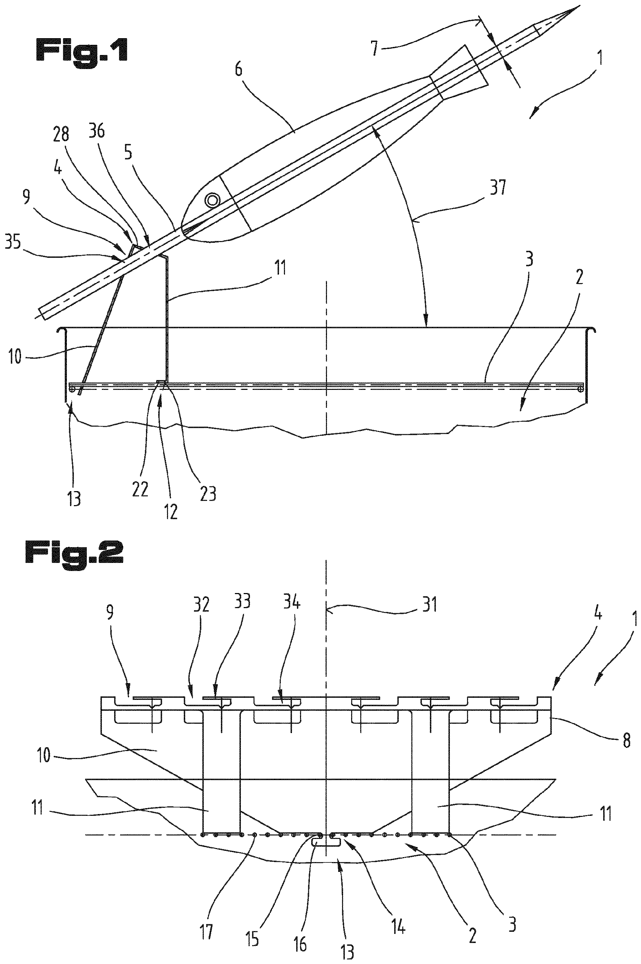

Fig. 1 zeigt eine schematische Schnittdarstellung eines Grilles 1 mit einem Brennraum 2 und einem über dem Brennraum angeordneten Gitterrost 3. Wie aus Fig. 1 ersichtlich, kann vorgesehen sein, dass am Gitterrost 3 ein Grillaufsatz 4 appliziert wird, welcher zum Halten von auf einem Spieß 5 angeordneten Grillgut 6 dient.

Insbesondere ist vorgesehen, dass mittels dem Grillaufsatz 4 das Grillgut 6 derart über dem Brennraum 2 positioniert werden kann, sodass eine vorteilhafte Wärmeeinwirkung vom Brennraum 2 auf das Grillgut 6 stattfindet. Der erfindungsgemäße Grillaufsatz 4 wird in weiterer Folge noch genauer und detailliert beschrieben.

Als Spieße 5 können beispielsweise Stäbe aus Holz, etwa Buchenholz, verwendet werden, welche einen Durchmesser 7 zwischen 8 mm und 20 mm, bevorzugt in etwa 14 mm, aufweisen können.

Alternativ zu Stäben aus Holz kann vorgesehen sein, dass die Spieße 5 aus einem metallischen Werkstoff, wie etwa Edelstahl, gefertigt sind und einen Durchmesser zwischen 1 mm und 8 mm aufweisen.

Der beschriebene und dargestellte Grillaufsatz 4 ist vorzugsweise für Grillgut 6 in Form von Fischen geeignet. Es ist jedoch auch möglich, dass sonstiges Grillgut 6 an den Spießen 5 angeordnet wird und somit am Grill 1 zubereitet wird.

Wie aus Fig. 1 weiters ersichtlich, weist der Grillaufsatz 4 einen Grillaufsatzkörper 8 auf, welcher als einteiliges Blechbiegeteil ausgebildet ist und an welchem eine Ausnehmung 9 zur Aufnahme des Spießes 5 angeordnet ist.

Fig. 2 zeigt eine zweite Schnittansicht durch den Grill 1, wobei die Schnittlinienführung dieser zweiten Schnittansicht in Draufsicht auf den Grill 1 gesehen um 90° versetzt ist. Insbesondere ist der der Grillaufsatz 4 in der Fig. 1 in einer Seitenansicht und in der Fig. 2 in einer Ansicht von vorne dargestellt. Der genaue Aufbau des Grillaufsatzes 4 wird in weiterer Folge anhand einer Zusammenschau der Figuren 1 bis 4 beschrieben.

Der Grillaufsatzkörper 8 weist einen ersten Blechschenkel 10 und einen zweiten Blechschenkel 11 auf, welche beiden Blechschenkel 10, 11 zum Abstützen des Grillaufsatzkörpers 8 am Gitterrost 3 ausgebildet sind. Der zweite Blechschenkel 11 ist jener Blechschenkel, welcher beim bestimmungsgemäßen Einsatz des Grillaufsatzes 4 dem Grillgut 6 zugewendet ist. In allen Einsatzfällen wirkt auf den zweiten Blechschenkel 11 eine Druckbelastung, wodurch vorgesehen sein kann, dass dieser einen Abstützbereich 12 aufweist, welcher flach am Gitterrost 3 des Grills 1 aufliegt. In einer weiteren Ausführungsvariante kann vorgesehen sein, dass der zweite Blechschenkel 11 mittels einem Befestigungsmittel am Grillrost 3 befestigt ist.

Der erste Blechschenkel 10 weist in einem dem Gitterrost 3 zugewandten Auflagebereich 13 eine Befestigungsaussparung 14 auf, mittels welcher der erste Blechschenkel 10 im Gitterrost 3 befestigt werden kann. Eine derartige Befestigungsaussparung 14 kann insbesondere notwendig sein, da es im Einsatzfall vorkommen kann, dass der erste Blechschenkel 10 auf Zug belastet wird und sich somit ohne Befestigungsaussparung 14 vom Gitterrost 3 abheben würde. Dies ist insbesondere der Fall, wenn das Grillgut 6 eine hohe Masse aufweist und der Gesamtschwerpunkt des Grillgutes 6, der Spieße 5 und des Grillaufsatzes 4 auf der vom ersten Blechschenkel 10 abgewandten Seite des zweiten Blechschenkels 11 liegt.

Die Befestigungsaussparung 14 kann insbesondere durch zwei Ausnehmungen 15 gebildet werden, welche in den ersten Blechschenkel 10 eingebracht sind und derart dimensioniert sind, dass der Gitterrost 3 darin aufgenommen werden kann. Insbesondere können die Ausnehmungen 15 symmetrisch bezüglich einer Mittelebene des Grillaufsatzes 4 ausgebildet sein.

Durch die Ausnehmungen 15 wird ein Haltebereich 16 gebildet, welcher zwei nebeneinander liegende Einzelstäbe 17 des Gitterrostes 3 hintergreift. Insbesondere kann vorgesehen sein, dass der Haltebereich 16 T-Förmig oder ähnlich einem Hammerkopf ausgebildet ist.

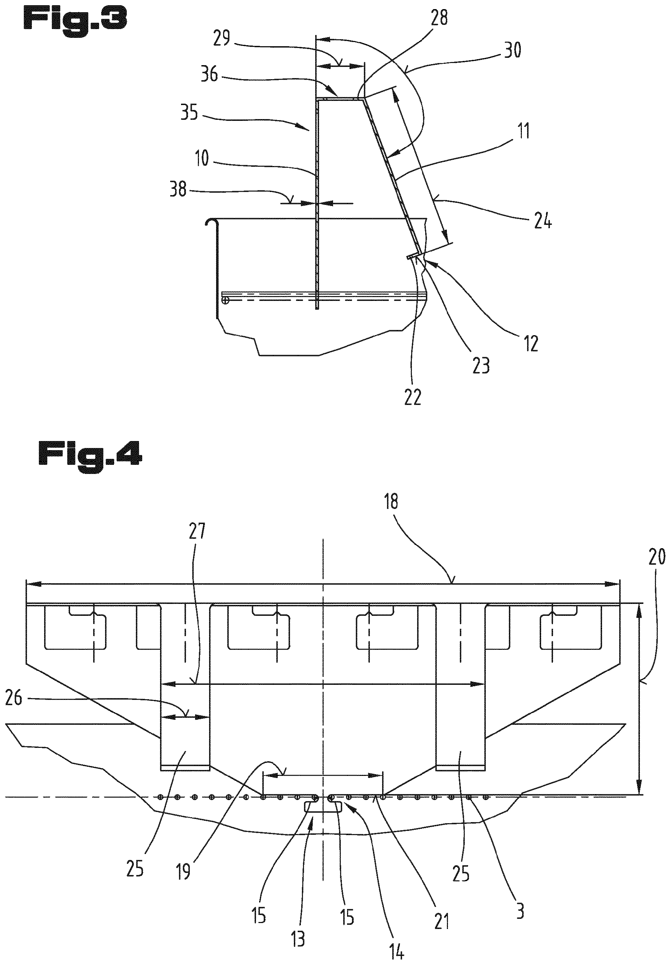

Fig. 3 zeigt eine schematische Schnittdarstellung des Grilles 1 mit Grillaufsatz 4, wobei der Grillaufsatz 4 in einer Stellung während dem Einsetzen dargestellt ist.

Fig. 4 zeigt eine zweite Schnittansicht durch den Grill 1, wobei die Schnittlinienführung dieser zweiten Schnittansicht in Draufsicht auf den Grill 1 gesehen um 90° versetzt ist.

Wie in den Fig. 3 und 4 gut ersichtlich, kann vorgesehen sein, dass der erste Blechschenkel 10 sich in Richtung zur Befestigungsaussparung 14 hin verjüngend ausgebildet ist. Wie in Fig. 4 eingezeichnet, kann vorgesehen sein, dass die Gesamtbreite 18 des Grillaufsatzes 4 zwischen 200 mm und 600 mm, insbesondere zwischen 300 und 550 mm, bevorzugt zwischen 400 mm und 500 mm, beträgt.

Weiters kann vorgesehen sein, dass die Breite 19 des verjüngten Bereiches zwischen 20 mm und 250 mm, insbesondere zwischen 50 mm und 150 mm, bevorzugt zwischen 80 mm und 120 mm, beträgt.

Weiters kann vorgesehen sein, dass die Aufstandhöhe 20 des ersten Blechschenkels 10 zwischen 50 mm und 300 mm, insbesondere zwischen 100 und 200 mm, bevorzugt zwischen 130 mm und 180 mm, beträgt. Die Aufstandhöhe 20 entspricht der Länge des ersten Blechschenkels 10 bis zu einer Auflagefläche 21.

Wie in den Fig. 1 und 3 besonders gut ersichtlich, kann vorgesehen sein, dass am zweiten Blechschenkel 11 im Abstützbereich 12 eine Lasche 22 ausgebildet ist, durch welche die Aufstandsfläche 23 des zweiten Blechschenkel 11 vergrößert wird. Die Lasche 22 kann insbesondere in einem Winkel von 90° zum zweiten Blechschenkel 11 angeordnet sein.

Wie aus Fig. 3 ersichtlich, kann der zweite Blechschenkel 11 eine Schenkellänge 24 zwischen 50 mm und 250 mm aufweisen. Wie in den Fig. 2 und 4 besonders gut ersichtlich, kann vorgesehen sein, dass der zweite Blechschenkel 11 nicht als einzelner Blechschenkel ausgebildet ist, sondern dass der Blechschenkel 11 zwei Blechschenkelstreifen 25 aufweist, welche in Form von einzelnen Blechstreifen ausgeführt sind. Insbesondere kann vorgesehen sein, dass die beiden Blechschenkelstreifen 25 eine Breite 26 zwischen 20 mm und 100 mm, bevorzugt zwischen 30 mm und 50 mm, aufweisen. Um eine gute Stabilität des Grillaufsatzes 4 erreichen zu können, kann vorgesehen sein, dass ein Außenabstand 27 der beiden Blechschenkelstreifen 25 zueinander zwischen 100 mm und 450 mm, insbesondere zwischen 200 mm und 300 mm, bevorzugt zwischen 240 mm und 280 mm, beträgt. Der Außenabstand 27 sollte zweckmäßigerweise nur maximal so groß gewählt werden, dass die beidseitigen klappbaren Gitterrostsegmente ungehindert hochgeklappt werden können, um beispielsweise Grillbriketts nachfüllen zu können.

Wie aus den Fig. 1 und 3 ersichtlich, kann vorgesehen sein, dass zwischen erstem Blechschenkel 10 und zweitem Blechschenkel 11 ein Verbindungsschenkel 28 angeordnet ist, welcher die beiden Blechschenkel 10, 11 miteinander verbindet. Der Verbindungsschenkel 28 kann eine Länge 29 zwischen 10 mm und 100 mm, insbesondere zwischen 20 mm und 60 mm, bevorzugt zwischen 35 mm und 45 mm, aufweisen. Wie aus Fig. 3 besonders gut ersichtlich, kann vorgesehen sein, dass der Verbindungsschenkel 28 in einem Winkel von 90° zum ersten Blechschenkel 10 angeordnet ist.

Wie in Fig. 3 dargestellt, kann vorgesehen sein, dass der erste Blechschenkel 10 und der zweite Blechschenkel 11 in einem Winkel 30 zueinander angeordnet sind.

Wie aus Fig. 2 ersichtlich, kann vorgesehen sein, dass der Grillaufsatz 4 bezüglich einer Mittelebene 31 symmetrisch ausgebildet ist. Weiters kann vorgesehen sein, dass über die Gesamtbreite 18 des Grillaufsatzes 4 verteilt sechs Ausnehmungen 9 für die Aufnahme von Spießen 5 ausgebildet sind. Weiters kann vorgesehen sein, dass die Ausnehmungen 9 jeweils einen Einsetzbereich 32 zum Einsetzen der Spieße 5 und einen Aufhahmebereich 33 zur Positionierung der Spieße 5 während des Grilleinsatzes aufweisen.

Wie in den Fig. 2 und 4 gut ersichtlich, kann vorgesehen sein, dass im Aufnahmebereich 33 jeweils eine Positioniervertiefung 34 ausgebildet ist, welche Positioniervertiefung 34 zur positionsgenauen und stabilen Aufnahme der Spieße 5 dient.

Bei einem derart ausgebildeten Grillaufsatz 4 können die Spieße 5 im Grillaufsatz 4 positioniert werden, in dem sie durch den Einsetzbereich 32 in die Ausnehmung 9 geführt werden und anschließend seitlich in den Aufhahmebereich 33 verschoben werden, wo sie in der Positioniervertiefung 34 platziert werden.

In einem weiteren nicht dargestellten Ausführungsbeispiel ist es auch möglich, dass kein Einsetzbereich 32 ausgebildet ist, sondern dass nur ein Aufnahmebereich 33 ausgebildet ist. Bei diesem weiteren Ausführungsbeispiel wird der Spieß 5 zum Einsetzen in den Aufnahmebereich 33 in Spießachsenlängsrichtung verschoben und so in den Aufnahmebereich 33 eingesetzt.

Wie in den Fig. 1 und 4 gut ersichtlich, kann vorgesehen sein, dass die Ausnehmung 9 insbesondere erste Ausnehmung 35, welche im ersten Blechschenkel 10 angeordnet ist und eine zweite Ausnehmung 36, welche im Verbindungsschenkel 28 und/oder im zweiten Blechschenkel 11 angeordnet ist, umfasst. Dadurch, dass die beiden Ausnehmungen 35, 36 zueinander beabstandet angeordnet sind, kann der Spieß 5 in den beiden Ausnehmungen 35, 36 aufgenommen werden und verklemmt sich in diesen. Insbesondere liegt der Spieß 5 im Einsatzzustand an der Oberseite der ersten Ausnehmung 35 und an der Unterseite der zweiten Ausnehmung 36 auf. Aus diesem Grund kann vorgesehen sein, dass die Positioniervertiefung 34 sowohl an der Oberseite der ersten Ausnehmung 35 als auch an der Unterseite der zweiten Ausnehmung 36 ausgebildet ist.

Durch die beschriebenen, geometrischen Zusammenhänge des Grillaufsatzes 4, kann vorgesehen sein, dass der Spieß 5 in einem Aufnahmewinkel 37 von etwa 30° zum horizontal ausgerichteten Grill 1 ausgerichtet ist.

Weiters kann vorgesehen sein, dass eine Wandstärke des Grillaufsatzkörpers zwischen 1mm und 3mm, insbesondere zwischen 1,4mm und 2,6mm, bevorzugt 2mm beträgt.

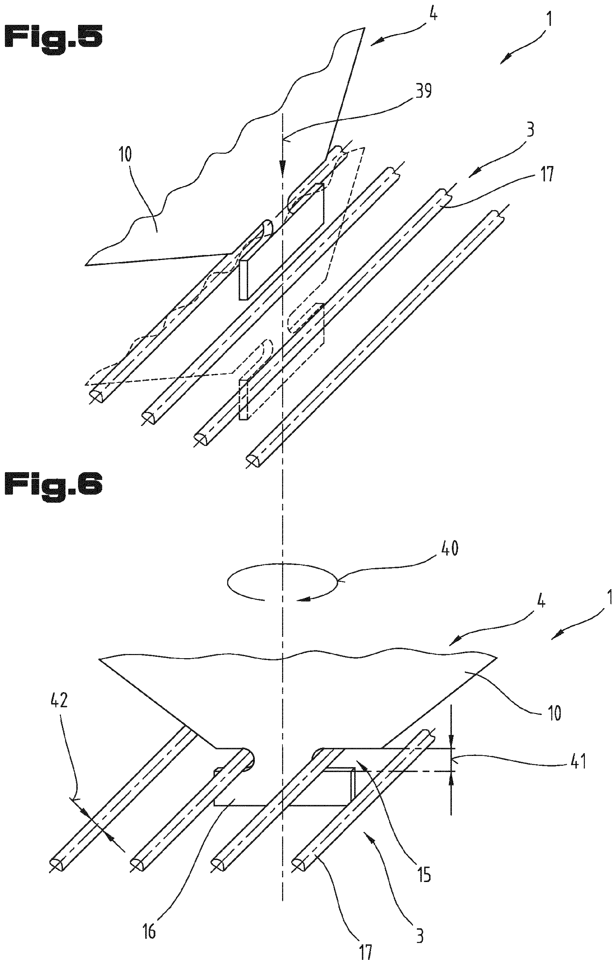

Anhand der Fig. 5 bis 7 wird die Montage des Grillaufsatzes 4 am Grill 1 beschrieben. Fig. 5 zeigt einen ersten Schritt zur Montage des Grillaufsatzes 4, wobei der Grillaufsatz 4 und der Grill 1, insbesondere der Gitterrost 3 in einer perspektivischen Ansicht teilweise geschnitten dargestellt sind.

Wie aus Fig. 5 ersichtlich, muss zum Montieren des Grillaufsatzes 4 am Gitterrost 3, dieser so ausgerichtet werden, dass der erste Blechschenkel 10 parallel zu den Einzelstäben 17 des Gitterrostes 3 verläuft. Dadurch kann der erste Blechschenkel 10 in Einsetzrichtung 39 in den Gitterrost 3 hineingeschoben werden bis dieser den Gitterrost 3 teilweise überlappt.

Fig. 6 zeigt einen weiteren Schritt zum Einsetzen des Grillaufsatzes 4, wobei die Ansichtsperspektive gleich wie in Fig. 5 gewählt wurde.

Wie aus Fig. 6 ersichtlich, kann nach dem Einsetzen des Grillaufsatzes 4 in den Gitterrost 3, der Grillaufsatz 4 in Drehrichtung 40 um 90° verdreht werden, sodass der Haltebereich 16 die Einzelstäbe 17 des Gitterrostes 3 hintergreift. Die Drehrichtung 40 kann hierbei entweder im Uhrzeigersinn oder auch gegen den Uhrzeigersinn gewählt werden.

Wie in Fig. 6 besonders gut ersichtlich, ist es sinnvoll, wenn zur korrekten Funktionsweise des Grillaufsatzes 4 eine Ausnehmungsbreite 41 der Ausnehmungen 15 an den Durchmesser 42 eines Einzelstabes 17 des Gitterrostes 3 angepasst ist. Insbesonere ist es sinnvoll, wenn die Ausnehmungsbreite 41 geringfügig größer gewählt ist, als der Außendurchmesser 42 eines Einzelstabes 17. Sinnvolle Ausnehmungsbreiten 41 sind etwa zwischen 1 mm und 10 mm.

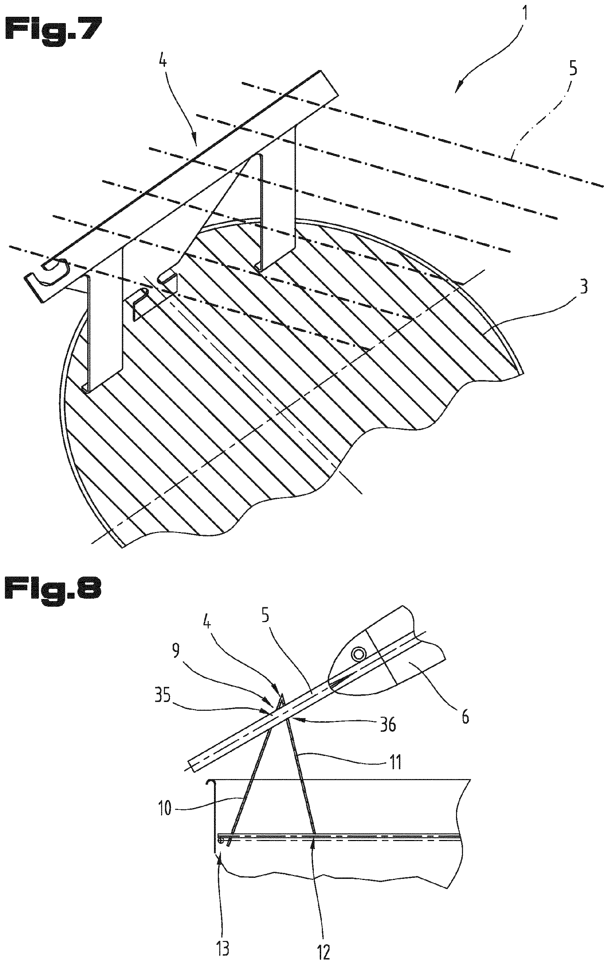

Fig. 7 zeigt eine perspektivische Ansicht eines am Grill 1 verbauten Grillaufsatzes 4. In Fig. 7 ist gut erkennbar, dass der Grillaufsatz 4 möglichst platzsparend am Grill 1 angeordnet ist, sodass das am Spieß 5 angeordnete Grillgut 6 möglichst gut durch die Hitze des Grills 1 behandelt wird.

In der Fig. 8 ist eine weitere und gegebenenfalls für sich eigenständige Ausführungsform des Grillaufsatzes 4 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Fig. 8 zeigt die weitere Ausführungsvariante des Grillaufsatzes 4, wobei eine Darstellung entsprechend Fig. 1 gewählt wurde. Wie aus Fig. 8 ersichtlich, kann vorgesehen sein, dass der Grillaufsatz 4 nur einen ersten Blechschenkel 10 und einen zweiten Blechschenkel 11 aufweist. Somit kann der Grillaufsatz 4 ohne an den zweiten Blechschenkel 11 angeschlossener Lasche 22 und ohne Verbindungsschenkel 28 ausgebildet sein. Eine derartige Ausführungsvariante eines Grillaufsatzes 4 bringt den Vorteil mit sich, dass der Grillaufsatzkörper 8 nur eine einzige Biegestelle zwischen ersten Blechschenkel 10 und zweiten Blechschenkel 11 aufweist. Dadurch ist der Grillaufsatz 4 einfach aufgebaut und kostengünstig herzustellen. Bei einer derartigen Ausführungsvariante ist darauf zu achten, dass die erste Ausnehmung 35 und die zweite Ausnehmung 36 in einem genügend großen Abstand zueinander angeordnet sind, sodass die beiden Auflagepunkte der Spieße 5 ausreichend weit voneinander entfernt sind um nicht eine übermäßig große Hebelwirkung der Spieße 5 in den Grillaufsatz 4 einzuleiten.

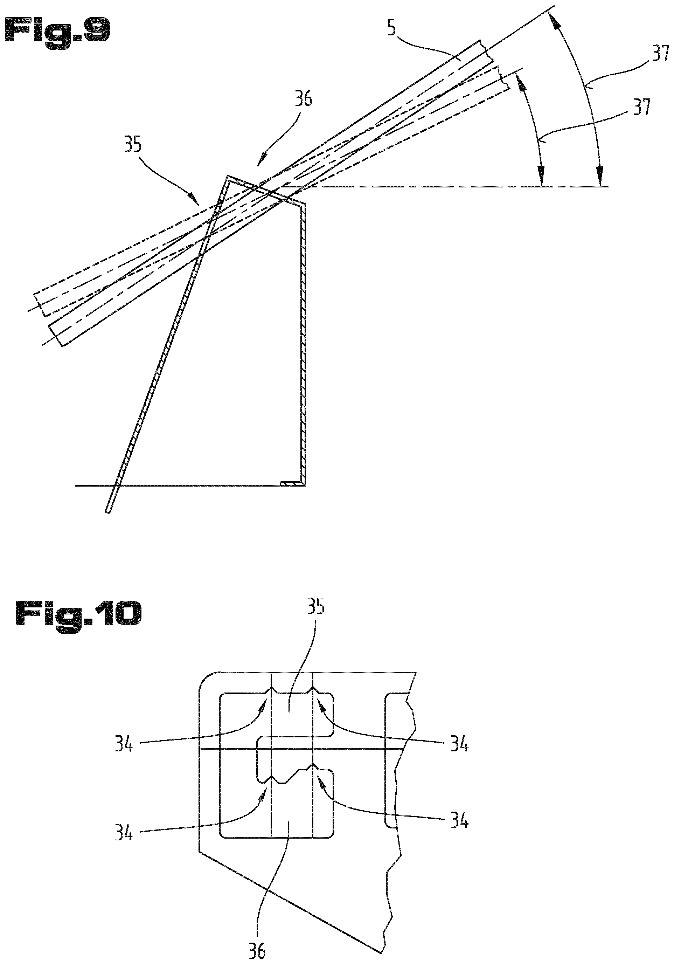

In den Fig. 9 und 10 ist in einer Seitenansicht und in einer Draufsicht eine weitere und gegebenenfalls für sich eigenständige Ausführungsform des Grillaufsatzes 4 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus einer Zusammenschau der Figuren 9 und 10 ersichtlich, kann vorgesehen sein, dass die erste Ausnehmung 35 und/oder die zweite Ausnehmung 36 eine Abstufung, insbesondere der Positioniervertiefungen 34 aufweisen, sodass die Spieße 5 in verschieden großen Winkeln zum Grill 1 positioniert werden können. Beispielsweise ist es denkbar, dass der Spieß 5 in einer ersten Aufnahmeposition in einem Winkel von 26° zum Grill 1 angeordnet werden kann und dass der Spieß 5 in einer zweiten Aufnahmeposition in einem Winkel von 34° zum Grill 1 angeordnet werden kann.

Die Ausführungsbeispiele zeigen mögliche Ausführungsvarianten des Grillaufsatzes 4, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1 bis 7, 8, 9 und 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Grillaufsatzes 4 dieser bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Grill | 26 | Breite Blechschenkelstreifen |
| 2 | Brennraum | 27 | Außenabstand Blechschenkelstreifen |
| 3 | Gitterrost | | |
| 4 | Grillaufsatz | 28 | Verbindungsschenkel |
| 5 | Spieß | 29 | Länge Verbindungsschenkel |
| 6 | Grillgut | 30 | Winkel der beiden Blechschenkel zueinander |
| 7 | Durchmesser Spieß | | |
| 8 | Grillaufsatzkörper | 31 | Mittelebene |
| 9 | Ausnehmung Spießhalter | 32 | Einsetzbereich |
| 10 | erster Blechschenkel | 33 | Aufnahmebereich |
| 11 | zweiter Blechschenkel | 34 | Positioniervertiefung |
| 12 | Abstützbereich zweiter Blechschenkel | 35 | erste Ausnehmung |
| | | 36 | zweite Ausnehmung |
| 13 | Auflagebereich erster Blechschenkel | 37 | Aufnahmewinkel |
| | | 38 | Wandstärke |
| 14 | Befestigungsaussparung | 39 | Einsetzrichtung |
| 15 | Ausnehmung Befestigungsaussparung | 40 | Drehrichtung |
| | | 41 | Ausnehmungsbreite |
| 16 | Haltebereich | 42 | Durchmesser Einzelstab Gitterrost |
| 17 | Einzelstab Gitterrost | | |
| 18 | Gesamtbreite | | |
| 19 | Breite verjüngter Bereich | | |
| 20 | Aufstandhöhe | | |
| 21 | Auflagefläche erster Blechschenkel | | |
| | | | |
| 22 | Lasche | | |
| 23 | Aufstandsfläche | | |
| 24 | Schenkellänge zweiter Blechschenkel | | |
| | | | |
| 25 | Blechschenkelstreifen | | |

## Patentansprüche

1. Grillaufsatz (4) zur Aufnahme von auf einem Spieß (5) angeordnetem Grillgut (6), welcher Grillaufsatz (4) zum Befestigen am Gitterrost (3) eines Grill (1) ausgebildet ist, wobei der Grillaufsatz (4) einen Grillaufsatzkörper (8) mit einer Ausnehmung (9) zur Aufnahme des Spießes (5) umfasst, wobei der Grillaufsatzkörper (8) als einteiliges Blechbiegeteil mit einem ersten Blechschenkel (10) und einem zweiten Blechschenkel (11) ausgebildet ist, wobei die beiden Blechschenkel (10, 11) als Abstützelemente zur Befestigung des Grillaufsatzkörpers (8) am Gitterrost (3) ausgebildet sind, **dadurch gekennzeichnet, dass** der erste Blechschenkel (10) eine Befestigungsaussparung (14) zum formschlüssigen Hintergreifen des Gitterrostes (3) aufweist und dass der zweite Blechschenkel (11) einen Abstützbereich (12) zum Abstützen des Grillaufsatzkörpers (8) am Gitterrost (3) aufweist, wobei die Befestigungsaussparung (14) des ersten Blechschenkels (10) durch zwei im Blechschenkel (10) angeordnete Ausnehmungen (15) ausgebildet ist, wobei durch die Ausnehmungen (15) ein T-förmiger Kopf gebildet ist.

2. Grillaufsatz nach Anspruch 1, **dadurch gekennzeichnet, dass** im Abstützbereich (12) des zweiten Blechschenkels (11) eine Lasche (22) angeordnet ist durch welche die Aufstandsfläche (23) vergrößert wird.

3. Grillaufsatz nach Anspruch 1 oder 2, **dadurch gekennzeichnet, dass** der erste Blechschenkel (10) gegenüber dem zweiten Blechschenkel (11) in einem Winkel (30) zwischen 70° und 175°, insbesondere zwischen 120° und 170°, bevorzugt zwischen 160° und 170° umgeschlagen ist.

4. Grillaufsatz nach einem der vorhergehenden Ansprüche, **dadurch gekennzeichnet, dass** zwischen erstem (10) und zweitem Blechschenkel (11) ein zwischenliegender Verbindungsschenkel (28) angeordnet ist.

5. Grillaufsatz nach einem der vorhergehenden Ansprüche, **dadurch gekennzeichnet, dass** der erste Blechschenkel (10) sich in Richtung zur Befestigungsaussparung (14) hin verjüngend ausgebildet ist.

6. Grillaufsatz nach einem der vorhergehenden Ansprüche, **dadurch gekennzeichnet, dass** der zweite Blechschenkel (11) im Wesentlichen durch zwei voneinander beabstandete Blechschenkelstreifen (25) gebildet ist.

7. Grillaufsatz nach einem der vorhergehenden Ansprüche, **dadurch gekennzeichnet, dass** die Ausnehmung (9) zur Aufnahme des Spießes (5) eine Positioniervertiefung (34) zur exakten Positionierung des Spießes (5) aufweist.

8. Grillaufsatz nach einem der vorhergehenden Ansprüche, **dadurch gekennzeichnet, dass** eine Wandstärke (38) des Grillaufsatzkörpers (8) zwischen 1mm und 3mm, insbesondere zwischen 1,4mm und 2,6mm, bevorzugt 2mm beträgt.

## Claims

1. A grill attachment (4) for receiving grillables (6) arranged on a skewer (5), said grill attachment (4) being designed for being attached to a grating (3) of a grill (1), wherein the grill attachment (4) comprises a grill attachment body (8) with a recess (9) for holding the skewer (5), wherein the grill attachment body (8) is formed as a one-piece sheet metal bending part with a first sheet metal leg (10) and a second sheet metal leg (11), wherein the two sheet metal legs (10, 11) are designed as supporting elements for attaching the grill attachment body (8) to the grating (3), **characterized in that** the first sheet metal leg (10) has a fastening recess (14) for engaging behind the grating (3) in a positively locked manner and that the second sheet metal leg (11) has a supporting region (12) for supporting the grill attachment body (8) on the grating (3), wherein the fastening recess (14) of the first sheet metal leg (10) is formed by two recesses (15) arranged in the sheet metal leg (10), wherein a T-shaped head is formed by the recesses (15).

2. The grill attachment according to claim 1, **characterized in that** a lug (22), by means of which the support surface (23) is enlarged, is arranged in the supporting region (12) of the second sheet metal leg (11).

3. The grill attachment according to claim 1 or 2, **characterized in that** the first sheet metal leg (10) is folded by an angle (30) of between 70° and 175°, in particular between 120° and 170°, preferably between 160° and 170°, in relation to the second sheet metal leg (11).

4. The grill attachment according to one of the preceding claims, **characterized in that** an intermediate connecting leg (28) is arranged between the first (10) and the second sheet metal leg (11).

5. The grill attachment according to one of the preceding claims, **characterized in that** the first sheet metal leg (10) is designed so as to taper towards the fastening recess (14).

6. The grill attachment according to one of the preceding claims, **characterized in that** the second sheet metal leg (11) is essentially formed by two sheet metal leg strips (25) spaced apart from one another.

7. The grill attachment according to one of the preceding claims, **characterized in that** the recess (9) for receiving the skewer (5) comprises a positioning recess (34) for exact positioning of the skewer (5).

8. The grill attachment according to one of the preceding claims, **characterized in that** a wall thickness (38) of the grill attachment body (8) amounts to between 1 mm and 3 mm, in particular between 1.4 mm and 2.6 mm, preferably 2 mm.

## Revendications

1. Élément de gril (4) pour le logement d'un produit à griller (6) disposé sur une brochette (5), cet élément de gril (4) étant conçu pour être fixé sur une grille (3) d'un gril (1), l'élément de gril (4) comprenant un corps d'élément de gril (8) avec un évidement (9) pour le logement de la brochette (5), le corps d'élément de gril (8) étant constitué d'une seule pièce pliée en tôle avec une première branche en tôle (10) et d'une deuxième branche en tôle (11), les deux branches en tôle (10, 11) étant conçues comme des éléments d'appui pour la fixation du corps d'élément de gril (8) du la grille (3), **caractérisé en ce que** la première branche en tôle (10) comprend un évidement de fixation (14) pour l'accrochage arrière, par complémentarité de forme, de la grille (3) et **en ce que** la deuxième branche en tôle (11) comprend une partie d'appui (12) pour l'appui du corps d'élément de gril (8) sont la grille (3), l'évidement de fixation (14) de la première branche en tôle (10) étant constitué de deux évidements (15) disposés dans la branche en tôle (10), une tête en forme de T étant formée par les évidements (15).

2. Élément de gril selon la revendication 1, **caractérisé en ce que**, dans la partie d'appui (12) de la deuxième branche en tôle (11), est disposée une patte (22) qui permet d'agrandir la surface de contact (23).

3. Élément de gril selon la revendication 1 ou 2, **caractérisé en ce que** la première branche de tôle (10) est repliée avec un angle (30), par rapport à la deuxième branche en tôle (11), entre 70° et 175°, plus particulièrement entre 120° et 170°, de préférence entre 160° et 170°.

4. Élément de gril selon l'une des revendications précédentes, **caractérisé en ce que**, entre la première (10) et la deuxième branche en tôle (11), est disposée une branche de liaison (28) intercalaire.

5. Élément de gril selon l'une des revendications précédentes, **caractérisé en ce que** la première branche en tôle (10) est conçue de façon à se rétrécir en direction de l'évidement de fixation (14).

6. Élément de gril selon l'une des revendications précédentes, **caractérisé en ce que** la deuxième branche en tôle (11) est constituée globalement deux brandes de branche en tôle (25) distantes entre elles.

7. Élément de gril selon l'une des revendications précédentes, **caractérisé en ce que** l'évidement (9) pour le logement de la brochette (5) comprend une cavité de positionnement (34) pour le positionnement exact de la brochette (5).

8. Élément de gril selon l'une des revendications précédentes, **caractérisé en ce qu'**une épaisseur de paroi (38) du corps d'élément de gril (8) est entre 1 mm et 3 mm, plus particulièrement entre 1,4 mm et 2,6 mm, de préférence de 2 mm.
